# FASCICULE DE BREVET EUROPEEN

(11) **EP 3 196 495 B1**
(45) Date de publication et mention de la délivrance du brevet: **19.02.2020**
(21) Numéro de dépôt: 17150468.1
(22) Date de dépôt: 05.01.2017
(51) Int. Cl.: F16D 25/08

(54) **BUTEE D'EMBRAYAGE, NOTAMMENT POUR VEHICULE AUTOMOBILE**
KUPPLUNGSLAGER, INSBESONDERE FÜR KRAFTFAHRZEUG
CLUTCH RELEASE BEARING, IN PARTICULAR FOR A MOTOR VEHICLE

(30) Priorité: 25.01.2016 FR 1650547
(43) Date de publication de la demande: 26.07.2017
(73) Titulaire: Valeo Embrayages, 80009 Amiens Cedex 2 (FR)
(72) Inventeur: COMMEINE, Emmanuel, 80290 COURCELLES SOUS MOYENCOURT (FR); LEBAS, Gilles, 80800 VILLERS BRETONNEUX (FR)
(74) Mandataire: Cardon, Nicolas

(56) Documents cités:
- EP-A1- 2 730 796
- DE-A1- 1 939 987
- FR-A1- 2 786 837

## Description

La présente invention concerne une butée d'embrayage, notamment pour véhicule automobile.

Un embrayage comporte classiquement un plateau de réaction, un plateau de pression mobile et un disque de friction monté entre lesdits plateaux de réaction et de pression. Le mouvement du plateau de pression est commandé par un diaphragme, lui-même commandé par une butée d'embrayage. Le disque de friction est lié en rotation à un arbre d'entrée d'une boîte de vitesses et le plateau de réaction est par exemple solidaire en rotation d'un volant lié à l'arbre moteur, tel par exemple qu'un vilebrequin d'un moteur à combustion interne.

La butée d'embrayage est commandée par un actionneur piloté par un calculateur électronique afin d'exercer une force prédéterminée sur le diaphragme et de le déplacer sur une distance donnée.

Le plateau de pression est ainsi mobile entre une position d'embrayage dans laquelle le disque de friction est serré entre lesdits plateaux de pression et de réaction, et une position de débrayage dans laquelle le disque de friction est libéré.

Il est connu d'utiliser une butée d'embrayage comportant un corps tubulaire destiné à être traversé par l'arbre d'entrée de la boîte de vitesses, un actionneur comportant une partie mobile tubulaire, également appelée piston, engagée dans une chambre de pression annulaire du corps et mobile en translation parallèlement à l'axe du corps. Le piston de l'actionneur est destiné à l'actionnement d'un diaphragme d'embrayage, par l'intermédiaire d'un palier à billes par exemple. Le piston est ainsi mobile entre une position embrayée dans laquelle un couple moteur est transmis à l'arbre d'entrée de la boîte de vitesses, et une position débrayée dans laquelle aucun couple n'est transmis à cet arbre.

Une telle butée comporte ainsi un actionneur de type C.S.C. (Concentric Slave Cylinder, en anglais).

Une butée d'embrayage de ce type est notamment connue du document FR 2 786 837, au nom de la Demanderesse.

Le corps tubulaire de cette butée d'embrayage comporte un orifice d'alimentation en fluide débouchant dans la chambre de pression et raccordé à une conduite d'alimentation.

L'utilisation d'une conduite et de moyens de raccordement appropriés est une solution onéreuse et nécessite un montage complexe.

L'invention a notamment pour but d'apporter une solution simple, efficace et économique à ce problème.

A cet effet, elle propose une butée d'embrayage, notamment pour véhicule automobile, comportant un corps délimitant une chambre de pression, un piston monté coulissant dans ladite chambre, ledit piston étant destiné à actionner un diaphragme lors de son coulissement par rapport au corps, le piston est annulaire et comporte une première extrémité montée dans la chambre de pression, de forme annulaire complémentaire, et une seconde extrémité équipée d'un palier, tel par exemple qu'une butée à billes, destinée à être intercalée axialement entre le diaphragme et le piston, caractérisée en ce que ledit corps comporte au moins un orifice d'alimentation débouchant à une extrémité dans la chambre de pression et à une autre extrémité dans une gorge d'alimentation ménagée sur une surface externe du corps, des moyens d'étanchéité étant situées de part et d'autre de ladite gorge.

La butée d'embrayage peut alors être associée à une partie d'un carter de boîte de vitesses dans laquelle est usiné un canal d'alimentation en fluide débouchant en regard de la gorge d'alimentation. Les moyens d'étanchéité permettent de confiner le fluide destiné à alimenter la chambre de pression et issu dudit canal d'alimentation dans la gorge d'alimentation, le fluide étant alors dirigé vers la chambre de pression au travers de l'orifice correspondant du corps de la butée d'embrayage.

La chambre de pression et le piston peuvent être annulaires.

Les moyens d'étanchéité peuvent comporter au moins deux joints toriques situés de part et d'autre de la gorge d'alimentation.

Les joints toriques s'étendent ainsi de façon annulaire de chaque côté de la gorge d'alimentation, afin d'éviter que le fluide contenu dans ladite gorge d'alimentation ne s'échappe au niveau de l'interface entre le carter de boîte de vitesses et le corps.

Dans ce cas, chaque joint torique peut être logé dans une gorge du corps.

Le corps peut être annulaire et peut comporter plusieurs orifices d'alimentation répartis sur une même circonférence et débouchant chacun dans la gorge d'alimentation et dans la chambre de pression.

La gorge d'alimentation assure alors le rôle de collecteur de fluide en vue de le distribuer de façon uniforme au travers des différents orifices d'alimentation.

L'invention concerne également un ensemble comportant un carter de boîte de vitesses et une butée d'embrayage du type précité, ledit carter comportant un logement dans lequel est monté, au moins en partie, le corps de la butée d'embrayage, ledit carter comportant un canal d'alimentation en fluide débouchant au niveau de la paroi interne dudit logement, en regard de l'orifice d'alimentation ou de la gorge d'alimentation dudit corps.

La liaison fluidique entre le carter de boîte de vitesses et la butée d'embrayage est ainsi établie directement, sans l'utilisation de conduites ou de raccords additionnels, ce qui permet de simplifier le montage et de réduire le coût d'un tel ensemble.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'une butée d'embrayage selon une forme de réalisation de l'invention,
- la figure 2 est une vue de face du corps,
- la figure 3 est une vue en coupe axiale et en perspective du corps,
- la figure 4 est une demi-vue en coupe axiale de la butée d'embrayage, en position débrayée,
- la figure 5 est une demi-vue en coupe axiale de la butée d'embrayage en position embrayée.

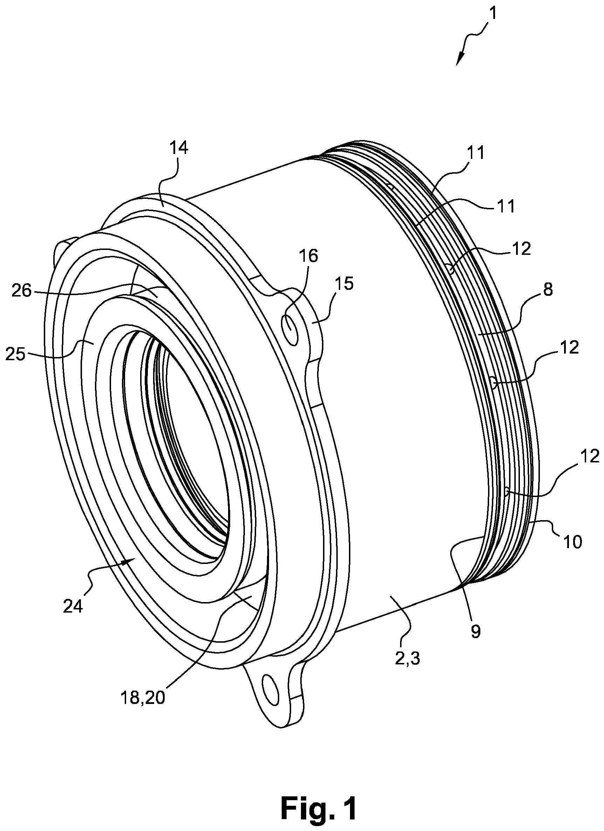

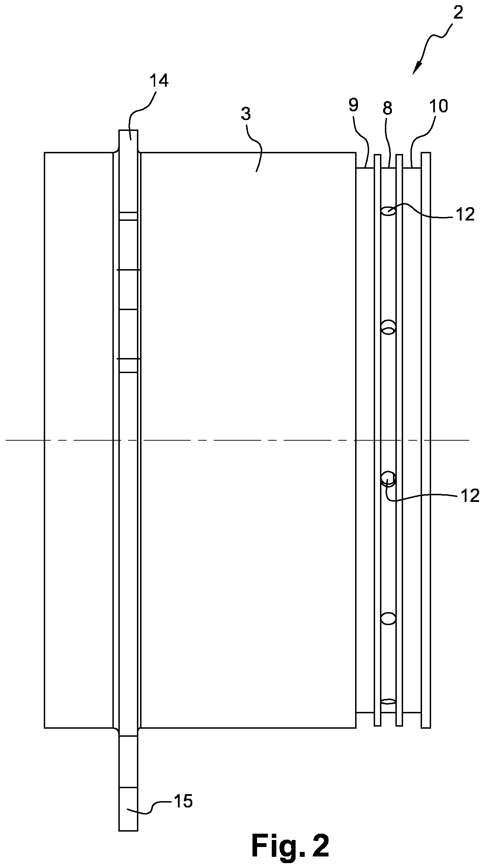

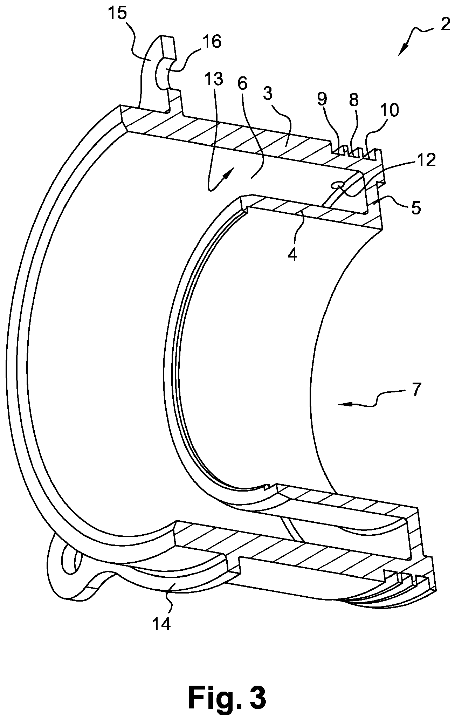

Les figures 1 à 5 illustrent une butée d'embrayage 1 pour véhicule automobile, selon une forme de réalisation de l'invention. La butée d'embrayage 1 comporte un corps cylindrique 2 comportant une paroi cylindrique radialement externe 3 et une paroi cylindrique radialement interne 4. Lesdites parois 3, 4 sont reliées à l'une de leurs extrémités par une cloison 5 s'étendant radialement. Lesdites parois 3, 4 et la cloison 5 délimitent un logement annulaire 6 ouvert vers l'avant, c'est-à-dire vers la gauche sur les figures.

La paroi interne 4 délimite intérieurement un passage 7 destiné à être traversé par un arbre d'entrée de la boîte de vitesses non représenté.

L'extrémité arrière de la paroi radialement externe 3 comporte trois gorges annulaires 8, 9, 10 écartées axialement les unes des autres, à savoir une gorge médiane 8 et des gorges avant 9 et arrière 10, situées respectivement de part et d'autre de la gorge médiane 8. Des joints toriques 11 en élastomère sont montés dans les gorges avant et arrière 9, 10.

Le corps 2 comporte des orifices d'alimentation 12 cylindriques, s'étendant radialement et débouchant dans le fond de la gorge médiane 8 et au niveau de la surface radialement interne 13 de la paroi externe 3. Les orifices 12 sont par exemple au nombre de 12 et sont régulièrement répartis sur toute la périphérie.

La paroi externe 3 comporte en outre, à proximité de son extrémité avant, un rebord radial annulaire 14 à partir duquel des pattes 15 ou des lobes de fixation s'étendent radialement vers l'extérieur. Les pattes de fixation 15 comportent des trous 16 permettant l'engagement de vis de fixation destinées à assurer la fixation du corps à un carter de boîte de vitesses 17.

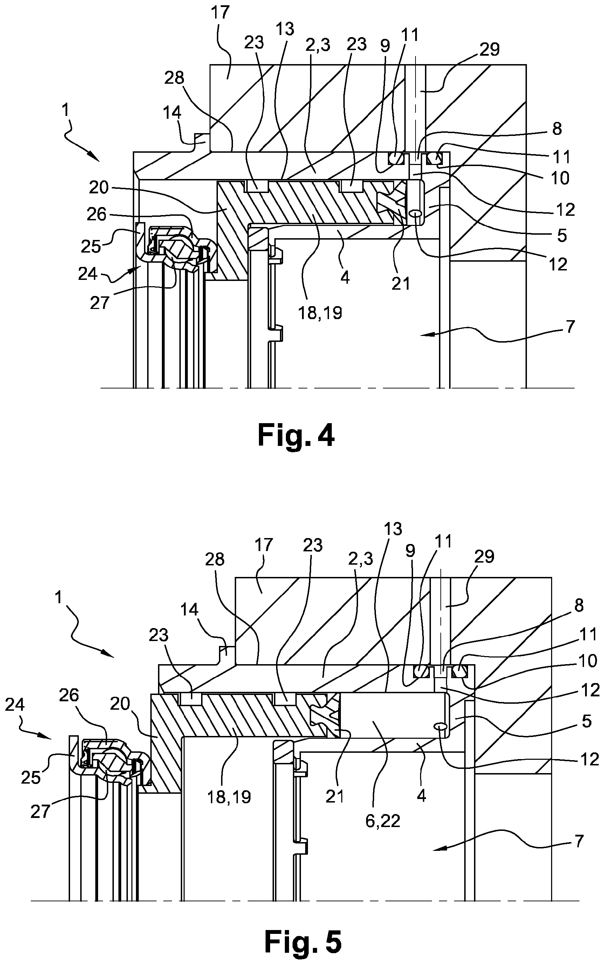

Un piston 18 est engagé dans le logement annulaire. Le piston 18 est annulaire et comporte une partie arrière 19 engagée dans ledit logement annulaire 6 et une partie avant 20 s'étendant radialement vers l'intérieur. L'extrémité arrière du piston 18 est pourvue de moyens d'étanchéité, tels par exemple qu'un joint à lèvre annulaire 21, destinés à fermer une chambre de pression 22 (figure 5) délimitée par les parois interne 4 et externe 3, la cloison 5 et l'extrémité arrière du piston 18.

Le piston 18 peut être équipé de moyens d'étanchéité au niveau de sa surface radialement externe, tels par exemple que des segments 23 venant en appui sur la surface interne 13 de la paroi externe 3 du corps 2.

Un palier de type butée 24 est monté à l'extrémité avant du piston 18. Ce palier 24 comporte une bague avant 25, destinée à être tournée du côté d'un diaphragme d'un mécanisme d'embrayage, une bague arrière 26 en appui sur la partie radiale avant 20 du piston 18 et des moyens de roulement, tels par exemple que des billes 27, situés entre les bagues avant et arrière 25, 26.

Une partie du carter d'embrayage 17 est visible aux figures 4 et 5. Celui-ci comporte un logement 28 dans lequel est monté le corps 2 de la butée d'embrayage 1. Le carter d'embrayage 17 comporte au moins un canal d'alimentation en fluide 29, tel par exemple que de l'huile, ledit canal 29 débouchant radialement au niveau de la surface interne du logement 28, en regard de la gorge médiane 8 et axialement entre les joints toriques 11.

Le diamètre du débouché du canal d'alimentation 29 au niveau de la surface correspondante est légèrement plus grand que la dimension axiale de la gorge médiane 8.

En fonctionnement, du fluide sous pression peut être amené dans la chambre de pression 22 au travers du canal 29 du carter de boîte de vitesses 17, de la gorge médiane 8 et des orifices d'alimentation 12 du corps 2. Lorsque la pression dans la chambre de pression 22 est inférieure à une valeur déterminée, l'effort de rappel axial exercé par le diaphragme sur le palier 24 et sur le piston 18 est tel que le piston 18 se trouve dans sa position rétractée, illustrée à la figure 4. Dans cette position, le piston 18 est majoritairement situé dans le logement annulaire 6 du corps 2. Cette position correspond à une position débrayée du mécanisme d'embrayage.

A l'inverse, lorsque la pression exercée dans la chambre de pression 22 dépasse la valeur seuil, le piston 18 est déplacé vers l'avant, repoussant le palier 24 et provoquant l'actionnement du diaphragme. Une telle position déployée du piston 18 est illustré à la figure 5. Cette position correspond à une position embrayée du mécanisme d'embrayage 1.

L'invention permet ainsi une liaison fluidique simple et efficace entre le canal d'alimentation 29 du carter d'embrayage 17 et la butée d'embrayage 24. La gorge 8 permet de distribuer de façon homogène le fluide au travers des différents orifices 12, dans la chambre de pression 22.

## Revendications

1. Butée d'embrayage (1), notamment pour véhicule automobile, comportant un corps (2) délimitant une chambre de pression (22), un piston (18) monté coulissant dans ladite chambre (22), ledit piston (18) étant destiné à actionner un diaphragme lors de son coulissement par rapport au corps (2), le piston (18) est annulaire et comporte une première extrémité montée dans la chambre de pression (22), de forme annulaire complémentaire, et une seconde extrémité équipée d'un palier (24), tel par exemple qu'une butée à billes, destinée à être intercalée axialement entre le diaphragme et le piston (18), **caractérisée en ce que** ledit corps (2) comporte au moins un orifice d'alimentation (12) débouchant à une extrémité dans la chambre de pression (22) et à une autre extrémité dans une gorge d'alimentation (8) ménagée sur une surface externe (3) du corps (2), des moyens d'étanchéité (11) étant situées de part et d'autre de ladite gorge (8).

2. Butée d'embrayage (1) selon la revendication 1, **caractérisée en ce que** les moyens d'étanchéité comportent au moins deux joints toriques (11) situés de part et d'autre de la gorge d'alimentation (8).

3. Butée d'embrayage (1) selon la revendication 2, **caractérisée en ce que** chaque joint torique (11) est logé dans une gorge (9, 10) du corps (2).

4. Butée d'embrayage (1) selon l'une des revendications 1 à 3, **caractérisée** en ce le corps (2) est annulaire et comporte plusieurs orifices d'alimentation (12) répartis sur une même circonférence et débouchant chacun dans la gorge d'alimentation (8) et dans la chambre de pression (22).

5. Ensemble comportant un carter (17) de boîte de vitesses et une butée d'embrayage (1) selon l'une des revendications 1 à 4, ledit carter (17) comportant un logement (28) dans lequel est monté, au moins en partie, le corps (2) de la butée d'embrayage (1), ledit carter (17) comportant un canal d'alimentation en fluide (29) débouchant au niveau de la paroi interne dudit logement (28), en regard de l'orifice d'alimentation (12) ou de la gorge d'alimentation (8) dudit corps (2).

## Patentansprüche

1. Kupplungsausrücklager (1), insbesondere für ein Kraftfahrzeug, welches einen Körper (2), der eine Druckkammer (22) begrenzt, und einen Kolben (18) der in der Kammer (22) gleitend gelagert ist, aufweist, wobei der Kolben (18) dazu bestimmt ist, während seines Gleitens in Bezug auf den Körper (2) eine Membran zu betätigen, wobei der Kolben (18) ringförmig ist und ein erstes Ende aufweist, das in der Druckkammer (22), von komplementärer ringförmiger Gestalt, angebracht ist, und ein zweites Ende, das mit einem Lager (24) wie zum Beispiel einem Axialkugellager ausgestattet ist und dazu bestimmt ist, axial zwischen der Membran und dem Kolben (18) angebracht zu werden,
**dadurch gekennzeichnet, dass** der Körper (2) wenigstens eine Zuführöffnung (12) aufweist, die an einem Ende in die Druckkammer (22) und an einem anderen Ende in eine Zuführrille (8), die auf einer Außenseite (3) des Körpers (2) ausgebildet ist, mündet, wobei Dichtmittel (11) beiderseits der Rille (8) angeordnet sind.

2. Kupplungsausrücklager (1) nach Anspruch 1, **dadurch gekennzeichnet, dass** die Dichtmittel wenigstens zwei O-Ringe (11) aufweisen, die beiderseits der Zuführrille (8) angeordnet sind.

3. Kupplungsausrücklager (1) nach Anspruch 2, **dadurch gekennzeichnet, dass** jeder O-Ring (11) in einer Rille (9, 10) des Körpers (2) aufgenommen ist.

4. Kupplungsausrücklager (1) nach einem der Ansprüche 1 bis 3, **dadurch gekennzeichnet, dass** der Körper (2) ringförmig ist und mehrere Zuführöffnungen (12) aufweist, die auf ein und demselben Umfang verteilt sind und jeweils in die Zuführrille (8) und in die Druckkammer (22) münden.

5. Anordnung, welche ein Getriebegehäuse (17) und ein Kupplungsausrücklager (1) nach einem der Ansprüche 1 bis 4 umfasst, wobei das Gehäuse (17) eine Aufnahme (28) aufweist, in welcher der Körper (2) des Kupplungsausrücklagers (1) wenigstens teilweise angebracht ist, wobei das Gehäuse (17) einen Fluidzuführkanal (29) aufweist, der an der Innenwand der Aufnahme (28) gegenüber der Zuführöffnung (12) oder der Zuführrille (8) des Körpers (2) mündet.

## Claims

1. A release bearing (1), in particular for a motor vehicle, having a body (2)delimiting a pressure chamber (22), and a piston (18) mounted slidingly in said chamber (22), said piston (18) being intended to actuate a diaphragm as it slides with respect to the body (2), the piston (18) is annular and has a first end mounted in the pressure chamber (22) of complementary annular shape, and a second end equipped with a bearing (24), for example a thrust ball bearing, intended to be axially inserted between the diaphragm and the piston (18), wherein said body (2) has at least one supply orifice (12) opening at one end into the pressure chamber (22) and at another end into a supply groove (8) configured on an outer surface (3) of the body (2), sealing means (11) being located on either side of said channel (8).

2. The release bearing (1) according to Claim 1, wherein the sealing means have at least two O-rings (11) located on either side of the supply groove (8).

3. The release bearing (1) according to Claim 2, wherein each O-ring (11) is received in a groove (9, 10) of the body (2).

4. The release bearing (1) according to one of Claims 1 to 3, wherein the body (2) is annular and has several supply orifices (12), distributed over a single circumference and each opening into the supply groove (8) and into the pressure chamber (22).

5. An assemblage having a gearbox housing (17) and a release bearing (1) according to one of Claims 1 to 4, said housing (17) having a receptacle (28) in which the body (2) of the release bearing (1) is at least partly mounted, said housing (17) having a fluid supply channel (29) opening at the inner wall of said receptacle (28), opposite the supply orifice (12) or the supply groove (8) of said body (2).
